# EUROPEAN PATENT SPECIFICATION

(11) **EP 2 492 120 B1**
(45) Date of publication and mention of the grant of the patent: **11.10.2017**
(21) Application number: 10824589.5
(22) Date of filing: 06.08.2010
(51) Int. Cl.: B60H 1/22, B60H 1/00, F23C 13/00, F23D 14/18, F23D 99/00

(54) **AIR CONDITIONING SYSTEM**
KLIMATISIERUNGSSYSTEM
SYSTÈME DE CLIMATISATION

(30) Priority: 21.10.2009 JP 2009242441
(43) Date of publication of application: 29.08.2012
(73) Proprietor: Mihama Corporation, Tokyo 105-8437 (JP)
(72) Inventor: MIHAMA, Takeshi, Tokyo 105-8437 (JP); YAMABE, Kenichiro, Tokyo 105-8437 (JP)
(74) Representative: Wibbelmann, Jobst
(86) International application number: PCT/JP2010/004961
(87) International publication number: WO 2011/048734

(56) References cited:
- JP-A- 4 349 017
- JP-A- 6 143 985
- JP-A- 6 260 196
- JP-A- S6 064 020
- JP-A- H11 334 348
- JP-A- 2001 163 039
- JP-A- 2003 211 945
- JP-U- 62 114 118
- JP-U- 63 117 614
- US-A- 2 551 823

## Description

### TECHNICAL FIELD

The present invention relates to an air conditioning system for a motor vehicle in which its wheels are driven with a motor using a secondary cell or fuel cell, for example, an electric vehicle, hybrid vehicle (a gasoline engine and electricity), and fuel cell vehicle.

### BACKGROUND ART

For heating in an electric vehicle, hybrid vehicle, and fuel cell vehicle, an electric heater, such as a PTC heater that heats circulating water or heats air directly, is conventionally used (See Patent Document 1).

However, since there is less waste heat in these vehicles in comparison with a gasoline vehicle, a heater, for example, in the electric vehicle consumes electric power charged in a secondary cell during air conditioning. Moreover, a heat transfer heater such as the PTC heater greatly consumes electric power.

There is thus a problem in that the heater consumes the power of a secondary cell and the like, and the consumption reduces the travel distance of the electric vehicle etc. When the secondary cell is used, its charge frequency therefore increases and the lifetime of the cell itself decreases. When a fuel cell is used, a fuel is consumed earlier.

A heating system using a heat pump method has been also considered. In the heating system, however, its efficiency is significantly low when the temperature of ambient air is low. In addition, there is another problem in that, when the temperature of ambient air is too low, a heat exchanger is frozen since heat is transferred from air outside a motor vehicle for heating. The efficiency of the heater using the heat pump method significantly decreases particularly in cold regions, which require the heater.

JP S60 64020 A relates to heating and defrosting of window panels by rising the temperature of air for heating through heat exchange by catalytic combustion of intake air and fuel in a heater case and blowing the combustion gas against the outside surfaces of the window panels. Upon actuation of a switch, a catalyst in a reactor is rapidly heated and air and fuel are sent to an intake cylinder, in which they are mixed and then supplied into the reactor. After catalytic combustion therein, the combustion gas is blown through an exhaust cylinder along the outside surfaces of window panels for defrosting thereof. At the same time, air fed through a blower absorbs the combustion heat through a heat exchanger and then is introduced through a duct into a passenger compartment.

US 2,551,823 relates to a heating system for motor vehicles and compartments. A radiator is mounted upon the dash beneath and forward of the instrument panel. A housing maybe mounted directly upon the radiator. Within a reaction chamber a catalyst bed is disposed. A mixture of fuel and air is supplied to the inlet of a tube. A heater means is located ahead of the bed to take the chill off of the flowing stream which has been cooled by vaporization of the fuel and to dry it, and this heater means maybe a portion of the exhaust manifold of the internal combustion engine, a resistance wire or a tube conducting hot exhaust gases. If not connected to the same source as the engine, the fuel supplied maybe anyone of a number of fuels. A blower draws in air over the radiator and drives it out into the occupant compartment. This air is drawn in through elongated openings stamped in the housing. The air passes between and in heat exchange relationship with fins of the radiator to the inlet opening of the blower. An outlet is connected with conduits leading to defroster slots opening upwardly behind the wind shield. If a valve is closed, vanes cavitate with respect to the upper element and deliver the air to a lower element to fan out the air stream and direct it downwardly against the floor of the vehicle or horizontally towards the seats of the automobile.

### CITATION LIST

### PATENT LITERATURE

Patent Document 1: Japanese Unexamined Patent publication (Kokai) No.H10-147138

### SUMMARY OF INVENTION

### TECHNICAL PROBLEM

The present invention was accomplished in view of the above-described problems, and its object is to provide an air conditioning system that can condition air efficiently, and that can inhibit the heater for air conditioning such as heating from consuming the power of the secondary cell and the like so as to avoid reduction of the travel distance and lifetime, in a motor vehicle having the secondary cell or fuel cell, in which its wheels are driven with a motor by using the secondary cell and the like, such as an electric vehicle, hybrid vehicle, and fuel cell vehicle.

### SOLUTION TO PROBLEM

This object is solved by the present invention as claimed in the independent claim. Preferred embodiments are defined by the dependent claims.

According to an aspect of the present invention, an air conditioning system that is incorporated in a motor vehicle including at least a passenger compartment for a passenger and a motor room that accommodates a secondary cell or a fuel cell for driving wheels with a motor, for conditioning air in the passenger compartment is provided. The air conditioning system comprises at least: at least one catalyst heater including a catalyst and a fuel tank that supplies a fuel to the catalyst; an air conditioning duct; and an air conditioning fan, wherein the at least one catalyst heater generates heat by supplying the fuel in the fuel tank and an oxidizing gas to the catalyst, the air conditioning duct is connected with an intake port for drawing air from the passenger compartment and a blowing port for blowing air into the passenger compartment, the intake port and the blowing port being formed in the passenger compartment, the air conditioning fan is provided in the air conditioning duct, the air in the passenger compartment is drawn into the air conditioning duct through the intake port, and the drawn air flows through the air conditioning duct and is blown from the blowing port with the air conditioning fan so that the air in the passenger compartment is capable of circulating, the air drawn into the air conditioning duct is conditioned by utilization of the heat generated with the at least one catalyst heater, and the conditioned air is blown into the passenger compartment so that the air in the passenger compartment is conditioned.

As describe above, the air conditioning system of the present invention includes at least one catalyst heater, the air conditioning duct, and the air conditioning fan. The air conditioning system is capable of circulating the air in the passenger compartment through the air conditioning duct by using the air conditioning duct connected with the intake port and blowing port formed in the passenger compartment and air conditioning fan. The air drawn into the air conditioning duct is conditioned by utilization of the heat generated with the catalyst heater, and the conditioned air is blown into the passenger compartment so that the air in the passenger compartment is conditioned.

Unlike the conventional air conditioning system using the PTC heater in an electric vehicle etc, the air conditioning system of the present invention uses the catalyst heater. In the air conditioning system of the present invention, the air in the passenger compartment can conditioned without consumption of the power of the secondary cell and the like by the PTC heater, needed in the past. Since the necessity of consuming the power of the secondary cell and the like by the heater for air conditioning can be eliminated, the motor vehicle can use more electric power to drive its wheels as compared with the past, and its travel distance can be thereby increased.

Since the motor vehicle can use more electric power to drive its wheels, the charge frequency of the secondary cell can be reduced more than in the past and the lifetime of the secondary cell itself can be extended. In the fuel cell, the consumption of a fuel for use except for driving the wheels can be reduced.

Unlike the conventional heater using the heat pump method, the air conditioning system of the present invention can condition air efficiently without being affected by the temperature of air outside the motor vehicle even in cold regions.

The air conditioning system of the invention may be configured such that the catalyst of the catalyst heater is inserted into the air conditioning duct, the air drawn into the air conditioning duct is heated by utilization of the heat generated with the catalyst heater and the heated air is blown into the passenger compartment so that the interior of the passenger compartment is heated.

In this air conditioning system, the heat generated with the catalyst heater can be efficiently transferred to the air drawn into the air conditioning duct, and the interior of the passenger compartment can be efficiently heated.

According to the invention, the catalyst heater further includes a heat conductor connected with the catalyst, the heat conductor of the catalyst heater is inserted into the air conditioning duct, the air drawn into the air conditioning duct is heated by utilization of the heat generated with the catalyst heater through the heat conductor and the heated air is blown into the passenger compartment so that the interior of the passenger compartment is heated.

In this air conditioning system, substances, such as wafer, discharged from the catalyst heater when the interior of the passenger compartment is heated can be prevented from entering the interior of the passenger compartment through the air conditioning duct directly.

The air conditioning system of the invention may be configured such that the air conditioning duct passes through a passenger seat and the air drawn into the air conditioning duct is heated by utilization of the heat generated with the catalyst heater so that the passenger seat is individually heated.

This air conditioning system is preferable because the air heated in the air conditioning duct can further heat the passenger seat individually.

The air conditioning system of the invention may be configured such that the catalyst heater is downsized and disposed in the passenger seat and the heat generated with the catalyst heater further heats the passenger seat.

The air conditioning system capable of heating the passenger seat directly by the heat generated with the catalyst heater can realize more efficient heating.

The air conditioning system of the invention may be configured such that the catalyst heater further includes a carrier made of ceramic or stainless steel for supporting the catalyst and a passenger is heated by far infrared rays radiated from the carrier though the blowing port.

This air conditioning system is preferable because the far infrared rays radiated from the carrier can further heat a passenger.

The air conditioning system may further include a refrigerant room that accommodates a refrigerant for a function of cooling the interior of the passenger compartment, and may be configured such that the air conditioning duct passes through the refrigerant room, the refrigerant in the refrigerant room is heated with the catalyst heater, the air drawn into the air conditioning duct is cooled by a heat pump method and the cooled air is blown into the passenger compartment so that the interior of the passenger compartment is cooled.

In this air conditioning system, the refrigerant heated and evaporated with the catalyst heater is cooled and condensed once and then the condensed refrigerant takes heat from the air in the air conditioning duct to evaporate again by the heat pump method so that the air in the air conditioning duct can be cooled. As a result, the interior of the passenger compartment can be cooled.

The refrigerant is preferably any one of HFO-1234yf, HFO-1234zf, isomer thereof, and carbon dioxide.

This preferable refrigerant has a low global warming potential and is environmentally-friendly.

The fuel may be methanol.

Methanol is commonly used as the fuel of the catalyst heater. For example, a conventional catalyst heater can be used.

The air conditioning system preferably further include a direct methanol fuel cell capable of driving the air conditioning fan.

The direct methanol fuel cell can share the fuel tank with the catalyst heater as a supply source of methanol.

When the air conditioning fan can be driven with the direct methanol fuel cell, the air conditioning system does not need to consume the power of the secondary cell and the like to drive the air conditioning fan, and thereby the cell charge frequency, cell lifetime, and travel distance can be more improved.

When the direct methanol fuel cell shares the fuel tank with the catalyst heater as a supply source of methanol, the air conditioning system can operate efficiently and have advantages in a weight and space since a new fuel tank for the direct methanol fuel cell does not need to be provided.

The air conditioning system may further include a solar cell that is capable of driving the air conditioning fan and is provided on a roof of the passenger compartment.

The air conditioning system with the solar cell does not need the power of the secondary cell and the like to drive the air conditioning fan and can drive the air conditioning fan with the solar cell, thereby improving the secondary cell charge frequency, secondary cell lifetime, and travel distance.

The air conditioning system may further include an outside air fan having a function of transmitting rotation to the air conditioning fan and an outside air duct that allows air outside the motor vehicle to flow through, and may be configured such that the outside air fan is provided in the outside air duct, the outside air fan is rotated by the air outside the motor vehicle flowing through the outside air duct while the motor vehicle travels and the air conditioning fan is rotatable by transmission of rotation of the outside air fan.

This air conditioning system does not need the power of the secondary cell and the like to drive the air conditioning fan, and can drive the air conditioning fan by ram pressure at traveling, thereby improving the secondary cell charge frequency, secondary cell lifetime, and travel distance.

### ADVANTAGEOUS EFFECTS OF INVENTION

The air conditioning system of the present invention can efficiently condition the air in the passenger compartment by utilization of the heat generated with the catalyst heater in a motor vehicle including the secondary cell or fuel cell. As a result, consuming the secondary cell or fuel cell power by the heater can be eliminated, and the power consumption by air conditioning can be greatly reduced. Therefore, the travel distance of the motor vehicle can be increased and the cell lifetime can be extended.

### BRIEF DESCRIPTION OF THE DRAWINGS

FIG. 1 is a schematic view showing an example of the air conditioning system of the present invention;
FIG. 2 is an explanatory view showing an exemplary heating structure with the catalyst heater;
FIG. 3 is an explanatory view showing another exemplary heating structure with the catalyst heater;
FIG. 4 is an explanatory view showing an exemplary cooling structure with the catalyst heater;
FIG. 5 is an explanatory view showing an exemplary structure to rotate the air conditioning fan with ram pressure.
FIG. 6 is an explanatory view showing an exemplary structure to heat a passenger seat with the catalyst heater.

### DESCRIPTION OF EMBODIMENTS

Hereinafter, embodiments of the present invention will be described, but the present invention is not limited to these embodiments.

In the conventional air conditioning system for use in an electric vehicle, fuel cell vehicle, and the like, consuming the secondary cell or fuel cell power by the PTC heater reduces the electric power used for driving the wheels, and this adversely affects on the travel distance and charge frequency.

The present inventor accordingly conceived an air conditioning system that conditions the air in the passenger compartment with the catalyst heater instead of the PTC heater that consumes the power of the secondary cell and the like. This air conditioning system can condition air sufficiently and efficiently, eliminate the necessity of consuming the cell power by the heater for air conditioning, and consume more electric power to drive the vehicle's wheels. This enables the travel distance to increase. As a result, the cell lifetime can be extended. The present inventor brought the present invention to completion on the basis of the above findings.

Embodiments of the present invention will be described below with reference to the drawings, but the present invention is not limited to these embodiments.

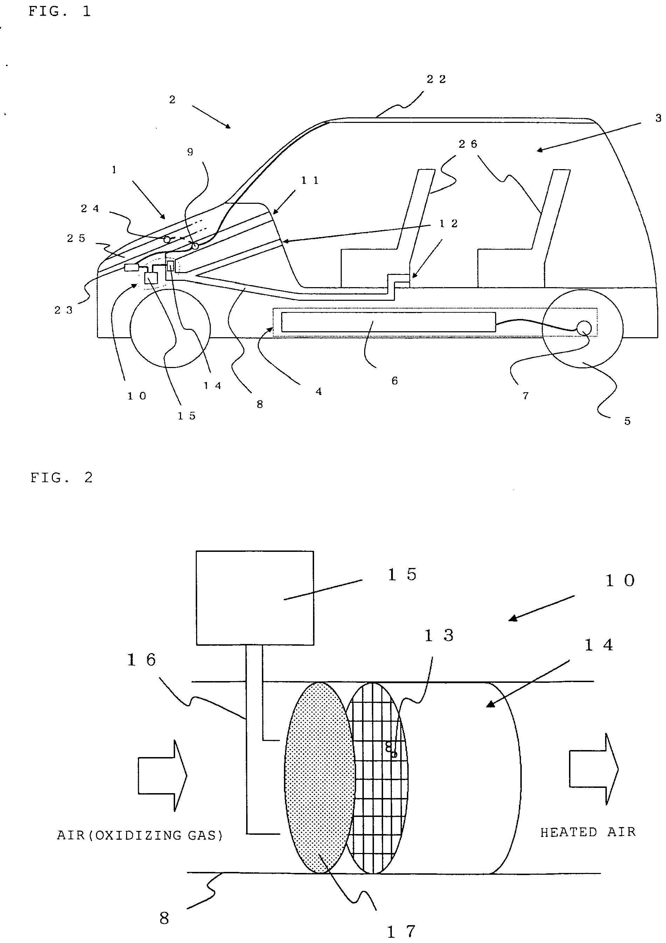

FIG. 1 shows an outline of an example of the air conditioning system of the present invention. The motor vehicle 2 that incorporates the air conditioning system 1 of the present invention is also shown in FIG. 1.

In this description, an electric vehicle having a secondary cell is exemplified as the motor vehicle 2. Other examples of the motor vehicle include a hybrid vehicle (particularly, a vehicle in which electricity is more used for driving) and a fuel cell vehicle having a fuel cell instead of the secondary cell.

The motor vehicle 2 includes the motor room 4 and wheels 5 in addition to the passenger compartment 3 for a passenger. The secondary cell 6 and a motor 7 are mounted in the motor room 4. The wheels 5 can be driven by rotation of the motor 7 with the secondary cell 6.

In FIG. 1, the motor room 4 is provided at the bottom of the motor vehicle 2. However, the present invention is not limited to this arrangement. The motor room 4 may be provided at an appropriate location according to other conditions.

The structure of the air conditioning system 1 incorporated in the motor vehicle 2 mainly includes the air conditioning duct 8, the air conditioning fan 9, and the catalyst heater 10.

The intake port 11 for drawing air from the passenger compartment 3 and the blowing port 12 for blowing air into the passenger compartment 3 are formed in the passenger compartment 3. The intake port 11 and blowing port 12 are connected with the air conditioning duct 8.

The air conditioning fan 9 is provided in the air conditioning duct 8. By rotating the air conditioning fan 9, the air in the passenger compartment 3 is drawn into the air conditioning duct through the intake port 11. The air conditioning fan rotation also causes the drawn air to flow through the air conditioning duct 8 and to be blown into the passenger compartment 3 from the blowing port 12. This structure enables the air in the passenger compartment 3 to circulate.

The air conditioning system also includes the catalyst heater 10 and is configured such that the air in the air conditioning duct 8 is conditioned by utilization of the heat generated with the catalyst heater 10. The air in the passenger compartment 3 can be conditioned by conditioning the air that flows through the air conditioning duct 8 and that can circulate.

Parts of the air conditioning system 1 of the present invention will be described below in more detail.

First, the catalyst heater 10 will be described in detail.

FIG. 2 shows an exemplary heating structure with the catalyst heater and an example of the catalyst heater.

The catalyst heater 10 has the fuel tank 15 and the carrier (catalyst body 14) supporting the catalyst 13. A fuel-supplying pipe 16 and a fuel permeable film 17 that is permeable not only to the fuel but also an oxidizing gas (e.g., air) are provided between the catalyst body 14 and the fuel tank 15. The fuel in the fuel tank 15 can be supplied to the catalyst body 14 supporting the catalyst 13 thorough the fuel-supplying pipe and fuel permeable film.

Examples of the catalyst 13 include platinum, palladium, rhodium, iridium, nickel, iron, ruthenium, molybdenum, tungsten, tin, a compound of niobium or titanium oxides with carbon or nitrogen, and a mixture thereof. However, the catalyst is not limited to these examples. Other catalysts that have been commonly used in the catalyst heater may be used.

The shape of the catalyst is not limited in particular. A catalyst in a fine particle form having a size of 1 to 100 nm, for example, is preferably used to broaden the surface area and to increase reaction efficiency.

Examples of the carrier include ceramic system such as alumina, silica, and zeolite, metal system such as aluminum and stainless steel, glass fiber, polyimide, and PTFE. However, the carrier is not limited to these examples. Other carriers that have been commonly used in the catalyst heater may be used.

Particularly, when alumina or zirconia fine ceramics, stainless steel, silicon carbide, carbon, or the like is used as the carrier, the carrier can radiate far infrared rays as described below.

The shape of the carrier is not limited in particular. For example, a honeycomb shape is preferable in terms of efficiency.

The catalyst 13 and carrier are appropriately selected according to the fuel to be used etc. When the catalyst 13 and carrier are selected according to conditions and, for example, the carrier is uniformly coated with the catalyst 13, a proper catalyst body 14 can be prepared.

A fuel tank that can properly store fuel for use may be used as the fuel tank 15. The size and shape etc., of the fuel tank may be designed appropriately according to the interior space of the motor vehicle 2.

Examples of the fuel include hydrogen, alcohols such as methanol and ethanol, hydrocarbon such as propane and butane. However, the fuel is not limited to these examples. A proper fuel may be prepared every time. Particularly, methanol is preferably used as the fuel since it is commonly used as the fuel of the catalyst heater.

The shape and number of the fuel-supplying pipe(s) 16 are not limited in particular as long as the fuel can be supplied to the catalyst body 14 properly.

Since the temperature of the catalyst heater 10 becomes high, a high heat resistance material is used as the fuel permeable film 17. Examples of the fuel permeable film used herein include a ceramic filter, glass wool, polytetrafluoroethylene (PTFE), polybenzimidazole (PBI), silicone rubber, and rubber. Other proper materials may be prepared every time. When the above fuel permeable film 17 is provided, the fuel permeates through the fuel permeable film 17 and diffuses, and thereby the fuel can be uniformly supplied to the catalyst body 14.

A heating structure with the catalyst heater 10 will now be described by way of example. The present invention is not limited to this structure. Another heating structure with the catalyst heater 10 may be employed.

In the example shown in FIG. 1 and 2, the catalyst body 14 supporting the catalyst 13 of the catalyst heater 10 is provided in the air conditioning duct 8. In this case, air that is drawn from the passenger compartment 3 and flows through the air conditioning duct 8 is used as the oxidizing gas.

When the interior of the passenger compartment 3 is heated, the air drawn through the intake port 11 with the air conditioning fan 9 flows through the air conditioning duct 8. The resulting air is then supplied to the catalyst 13 in the catalyst body 14 and reacts with the fuel supplied from the fuel tank 15. The reaction generates heat. The air in the air conditioning duct 8 is heated by the generated heat, and the heated air is then blown from the blowing port 12 so that the air in the passenger compartment 3 is heated.

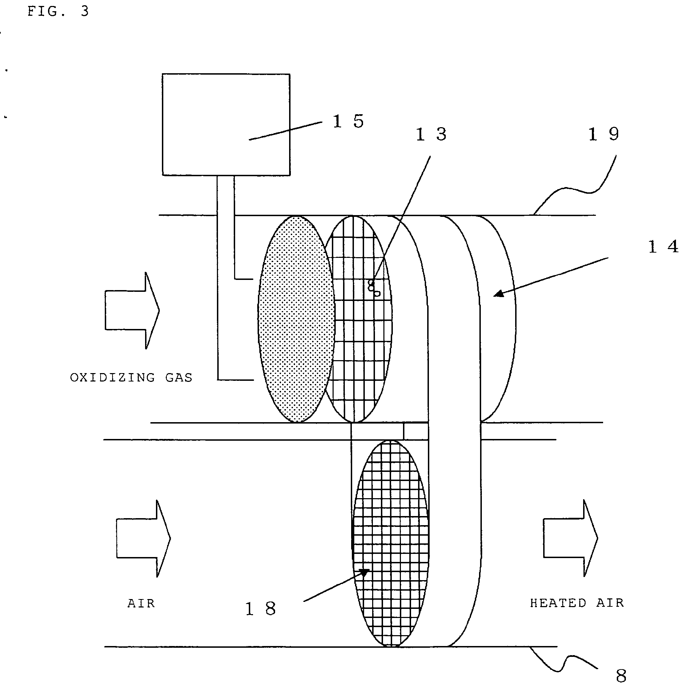

FIG. 3 shows another exemplary heating structure with the catalyst heater. In the example shown in FIG. 3, the catalyst heater 10 further has the heat conductor 18. The heat conductor 18 is connected with the catalyst body 14 supporting the catalyst 13 and is inserted into the air conditioning duct 8. The material and shape etc., of the heat conductor 18 are not limited in particular. Any heat conductor capable of efficiently transferring the heat generated at the catalyst 13 to the air in the air conditioning duct 8 can be used.

On the other hand, the catalyst body 14 is provided at the exterior of the air conditioning duct 8. An oxidizing-gas-supplying pipe 19 for supplying an oxidizing gas such as air to the catalyst body 14 is provided separately. The oxidizing-gas-supplying pipe 19 is led to, for example, the exterior of the motor vehicle at the upstream and downstream sides of the catalyst body 14. The oxidizing gas such as air to be supplied to the catalyst body 14 can be taken in from the exterior of the motor vehicle with a fan and the like provided separately. The oxidizing gas that is not used in the reaction on the catalyst 13 and water produced by the reaction (water that has been converted into vapor due to the generated heat ) are discharged to the exterior of the motor vehicle.

During heating, the fuel and air etc., are supplied to the catalyst body 14 from the fuel tank and oxidizing-gas-supplying pipe 19, respectively, to react them and heat is generated by the reaction. The generated heat is transferred to the heat conductor 18, and the air in the air conditioning duct 8 is heated through the heat conductor 18 so that the interior of the passenger compartment 3 can be heated.

In the case shown in FIG. 2, for example, use of a carrier made of ceramic, stainless steel, or the like and disposing the catalyst heater 10 near the blowing port 12 enables a passenger in the passenger compartment 3 to be further heated by far infrared rays radiated from the carrier though the blowing port 12 while the air in the air conditioning duct 8 is heated by utilization of the heat generated with the catalyst heater 10 at heating.

Next, a cooling structure with the catalyst heater 10 will be described by way of example.

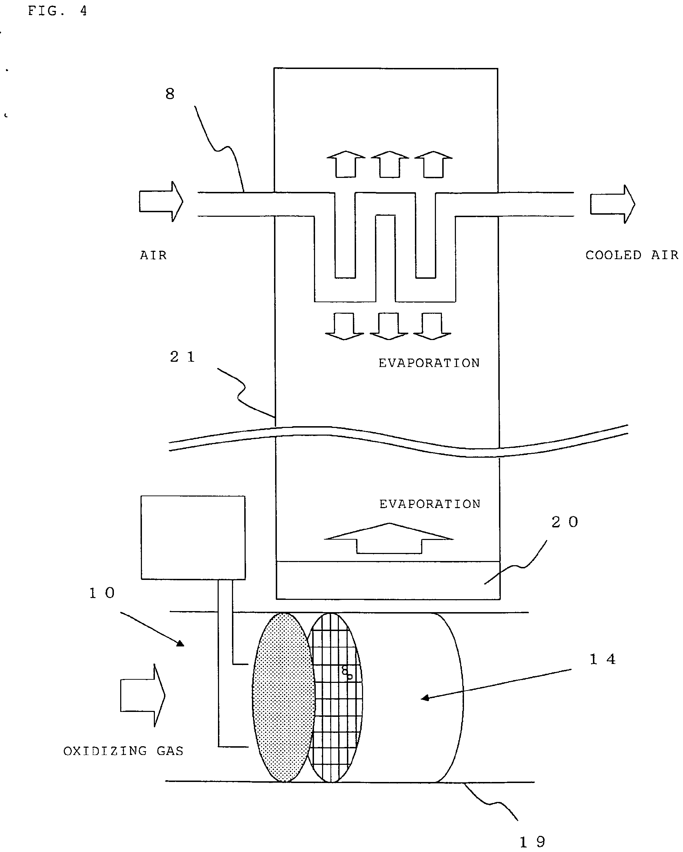

The air conditioning system 1 of the present invention can also include a function of cooling the interior of the passenger compartment 3. In this case, as shown in FIG. 4, the refrigerant room 21 that accommodates the refrigerant 20 is further provided, the air conditioning duct 8 passes through the refrigerant room 21, and the catalyst heater 10 (particularly, the catalyst body 14) is disposed near the refrigerant room 21.

Examples of the refrigerant 20 include a fluorine refrigerant HFO-1234yf and HFO-1234zf, isomer thereof, a fluorine refrigerant such as R-134a, carbon dioxide, ammonia, and a hydrocarbon system, which have low global warming potential. Other commonly used refrigerants may be used.

The size and shape of the refrigerant room 21, the arrangement of the air conditioning duct 8 passing through the refrigerant room 21 etc., are not limited in particular, and can be appropriately designed so as to cool the air in the air conditioning duct 8 by the heat pump method as described below.

The arrangement of the catalyst heater 10 is also not limited in particular. For example, the catalyst heater 10 can be disposed near the bottom of the refrigerant room 21, in which the refrigerant 20 is collected. When the catalyst heater 10 is disposed at such a position, the catalyst heater 10 can heat and evaporate the refrigerant 20 efficiently.

During cooling, the fuel and oxidizing gas are supplied to the catalyst body 14 of the catalyst heater 10, and heat is generated by the reaction between them. The generated heat evaporates the refrigerant 20 in the refrigerant room 21. The evaporated refrigerant 20 is then cooled and condensed, for example, at near the air conditioning duct 8 disposed at an upper part inside the refrigerant room 21. The condensed refrigerant then takes heat from the air in the air conditioning duct 8 so that it evaporates again. The air in the air conditioning duct 8 is cooled by such a heat pump method, and thereby the interior of the passenger compartment 3 can be cooled.

Incidentally, the present invention is not limited to this example. Another cooling structure with the catalyst heater 10 can be employed.

With regard to the catalyst heater 10 used for heating and cooling in the air conditioning system, a plurality of the catalyst heaters 10 as a whole can be provided, and the catalyst heaters can be divided into those for use in heating and cooling.

Alternatively, one catalyst heater 10 (or catalyst heaters 10) is prepared, and the prepared catalyst heater(s) 10 is provided such that it is used for both healing and cooling. For example, as the combination of the examples shown in FIG. 3 and 4, one catalyst heater 10 can be used to heat the air in the air conditioning duct 8 through the heat conductor 18 and also to cool the air in the air conditioning duct 8 with a heated refrigerant 20 by the heat pump method. In this case, the heating and cooling may be switched in such a manner that the air conditioning duct 8 is branched and the branched duct through which the air flows is switched.

Next, the air conditioning duct 8 will be described in more detail.

The air conditioning duct 8 is connected with the intake port 11 and the blowing port 12 so that the air in the passenger compartment 3 can circulate. The air conditioning duct 8 may be provided such that air in its interior is conditioned with the catalyst heater 10.

The number and arrangement of the intake port(s) 11 and blowing port(s) 12 are not limited in particular. The shape and number of the air conditioning duct(s) 8 are also not limited in particular. These are appropriately designed according to conditions so as to perform the circulation and air conditioning of the air in the passenger compartment 3 efficiently.

For example, the air conditioning ducts for heating and for cooling are prepared individually, and these ducts can be provided so as to join near the intake port 11 and blowing port 12. In this case, an air flow direction can be selected properly at heating or cooling by using a valve and the like.

Alternatively, one air conditioning duct can be used for both healing and cooling. This enables space-saving.

Moreover, the air conditioning duct(s) can be led to the exterior of the motor vehicle to exchange air between the interior of the passenger compartment 3 and exterior of the motor vehicle.

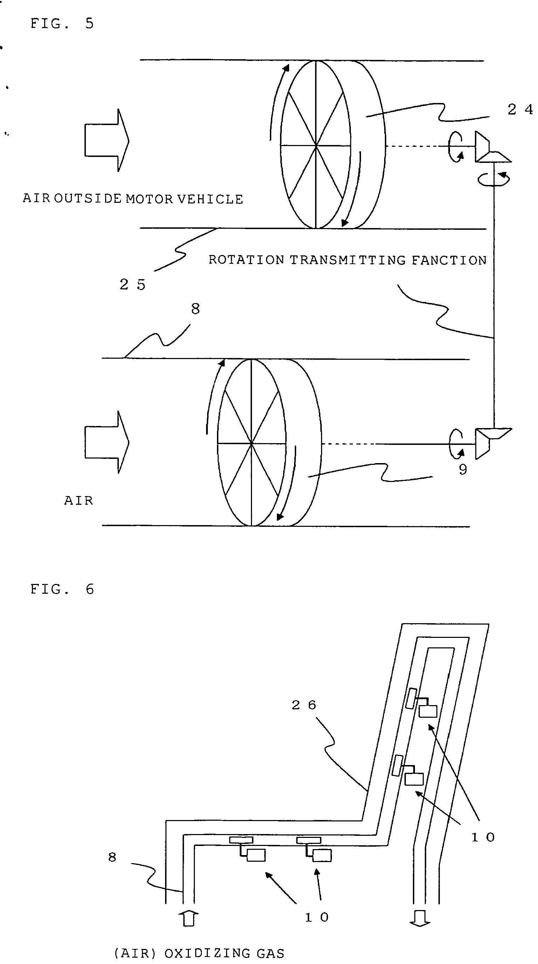

The air conditioning duct 8 can pass through the passenger seat. An exemplary structure to heat a passenger seat with the catalyst heater is shown in FIG. 6.

For example, for heating, when the air conditioning duct 8 passes through each passenger seat 26, the air heated with the catalyst heater 10 flows through air conditioning duct 8 in the passenger seat so that the passenger seat 26 can be heated. With a valve etc., provided properly, each passenger seat 26 can be heated individually.

When the catalyst heater 10 is provided in the passenger seat 26, the heat generated by the catalyst heater 10 itself can also heat the passenger seat. For example, when a plurality of downsized catalyst heaters 10 are provided in the passenger seat 26, each area in the passenger seat 26 can be heated more efficiently. In this case, the number and size etc., of the catalyst heaters 10 provided in the passenger seat 26 are not limited in particular.

Next, the air conditioning fan will be described in more detail.

According to the conditions of other parts, a proper number of the air conditioning fans 9 having a proper shape can be provided at proper positions in the air conditioning duct 8 such that the air in the passenger compartment 3 is drawn thorough the intake port 11, the drawn air flows through the air conditioning duct 8 and is blown from the blowing port 12. For example, an air conditioning fan having the same shape as that of a conventional air conditioning fan can be used.

Methods of driving to rotate the air conditioning fan 9 are not limited in particular. In this method, the secondary cell 6 can be used. With a means individually provided as described in a preferred example below, the power of the secondary cell 6 can be prevented from being consumed to condition air. That is, the motor vehicle can consume the power of the secondary cell 6 more to drive its wheels, and further extend its travel distance.

As described in FIG. 1, first, a solar cell 22 can be provided on the roof of the passenger compartment 3 of the motor vehicle 2 to supply power from the solar cell 22 to the air conditioning fan 9, for example. The size and arrangement etc., of the solar cell 22 can be appropriately designed according to necessary electric power.

As shown in FIG. 1, the direct methanol fuel cell 23 may be further provided and used for driving to rotate the air conditioning fan 9. In this case, when methanol is used as the fuel of the catalyst heater 10, the direct methanol fuel cell 23 can share the fuel tank 15 with the catalyst heater 10 as a supply source of methanol. When the direct methanol fuel cell 23 shares the fuel tank 15 with the catalyst heater 10, it is not necessary to prepare a new fuel tank, and this enables weight reduction and space-saving.

Another way of driving to rotate the air conditioning fan 9 is to use ram pressure of air outside the motor vehicle while the motor vehicle travels, particularly at a high speed. FIG. 5 shows an exemplary structure to rotate the air conditioning fan with ram pressure.

The structure to rotate the air conditioning fan shown in FIG. 5 includes the outside air fan 24 and the outside air duct 25 in which the outside air fan 24 is provided, in addition to the air conditioning fan 9. The outside air duct 25 is led to the exterior of the motor vehicle so that air outside the motor vehicle can flow through its interior. The outside air fan 24 has a function of transmitting its rotation to the air conditioning fan 9 with a bevel gear and the like.

More specifically, when the motor vehicle travels, the air outside the motor vehicle enters the outside air duct 25 and flows through the outside air duct so that the outside air fan 24 in outside air duct is rotated by ram pressure. The air conditioning fan 9 is configured to be rotated by the transmission of the rotation of the outside air fan 24 with the transmitting function.

The function of transmitting the rotation to the air conditioning fan 9, realized by the outside air fan 24 is not limited in particular as long as it can transmit the rotation to the air conditioning fan 9.

In FIG. 5, for example, the rotation of the outside air fan 24 is transmitted to the air conditioning fan 9 by using the bevel gear simply. Alternatively, the air conditioning fan 9 and outside air fan 24 may be both waterwheel-shaped fans, and they may be share an axis concentrically. In this transmitting function, the air conditioning fan 9 concentric with the outside air fan 24 can be rotated by the rotation of the outside air fan 24 with ram pressure.

An alternative function employed herein can be configured such that a storage cell is provided separately, the outside air fan 24 is connected with the storage cell, the storage cell is charged by the rotation of the outside air fan 24 with ram pressure, and the air conditioning fan 9 is rotated with the charged storage cell.

The present invention is not limited to the above-described functions. A proper rotation structure can be prepared every time.

In the present invention, when the motor vehicle stops or travels at a low speed, the air conditioning fan 9 can be driven to rotate with the solar cell 22 or direct methanol fuel cell 23. Conversely, when the motor vehicle travels at a high speed, the air conditioning fan 9 can be driven to rotate with the above function including the outside air fan 24 and so on. Moreover, use of a proper combination of them enables the air conditioning fan 9 to be driven to rotate more stably.

As described above, the air conditioning system 1 of the present invention can condition (heat and cool) the air in the passenger compartment 3 by utilization of the heat generated with the catalyst heater 10.

For the use of the catalyst heater 10, the air conditioning system of the present invention can prevent the air conditioning from consuming the power of the secondary cell 6, unlike the conventional PTC heater in an electric vehicle etc., and greatly increase the travel distance as compared with the past. The secondary cell charge frequency can be therefore reduced and the secondary cell lifetime can be extended.

Since the fuel cell motor vehicle does not need to consume electric power to condition air, the fuel of the fuel cell can be prevented from decreasing for use except for driving the wheels, and thereby the travel distance can be increased.

In the conventional air conditioning system using the heat pump method in which heat is drawn from the air outside the motor vehicle, for example, heating efficiency in cold regions is significantly low. On the other hand, the air conditioning system 1 with the catalyst heater 10 of the present invention can perform air conditioning such as heating stably and efficiently without being affected by the outside air temperature.

### EXAMPLE

The present invention will be described below in more detail with reference to Examples, but the present invention is not limited thereto.

### (Example)

The air conditioning system 1 with the catalyst heater 10 of the present invention shown in FIG. 1 was prepared. The air conditioning system 1 of the present invention was used to conduct an experiment in which the interior of a space having approximately the same size as a passenger compartment was heated and held at a constant temperature of 23°C for a predetermined time under an outside air temperature of 5°C. The secondary cell 6 was also prepared separately from the air conditioning system 1 of the present invention.

Methanol was used as the fuel of the catalyst heater 10. The secondary cell 6 was used in driving to rotate the air conditioning fan.

As a result, the air conditioning system 1 of the present invention was able to hold the interior of the space at a constant temperature of 23°C for 30 hours with a small amount of power consumption in the secondary cell 6 separately prepared.

### (Comparative Example)

The identical secondary cell 6 as Example was prepared. Without using the air conditioning system 1 of the present invention, heating was performed as with Example except for using a conventional PTC heater with the secondary cell 6.

As a result, a temperature of 23°C was kept for 5 hours with a 30 percent of power of the secondary cell 6 consumed by the PTC heater for heating.

As described in Example, the air conditioning system 1 of the present invention can condition air for a long time with a small amount of power consumption in the secondary cell 6, unlike the conventional method described in Comparative Example. The air conditioning system 1 of the present invention therefore allows the motor vehicle to use more power of the secondary cell 6 to travel as compared with the past (e.g., equal to or more than 30 percent of power for Example and Comparative Example above). A longer travel distance can be thereby achieved.

It is to be noted that the present invention is not limited to the foregoing embodiment. The embodiment is just an exemplification, and any examples that have substantially the same feature and demonstrate the same functions and effects as those in the technical concept described in claims of the present invention are included in the technical scope of the present invention.

## Claims

1. An air conditioning system (1) that is to be incorporated in a motor vehicle (2) including at least a passenger compartment (3) for a passenger and a motor room (4) that accommodates a secondary cell (6) or a fuel cell for driving wheels with a motor (7), for conditioning air in the passenger compartment, the air conditioning system comprising at least:
at least one catalyst heater (10) including a catalyst (13) and a fuel tank (15) that supplies a fuel to the catalyst;
an air conditioning duct (8); and
an air conditioning fan (9), wherein
the at least one catalyst heater (10) generates heat by supplying the fuel in the fuel tank and an oxidizing gas to the catalyst (13),
the air conditioning duct (8) is connected with an intake port (11) for drawing air from the passenger compartment (3) and a blowing port (12) for blowing air into the passenger compartment (3), the intake port (11) and the blowing port (12) being formed in the passenger compartment (3),
the air conditioning fan (9) is provided in the air conditioning duct (8),
the air in the passenger compartment (3) is drawn into the air conditioning duct (8) through the intake port (11), and the drawn air flows through the air conditioning duct (8) and is blown from the blowing port (12) with the air conditioning fan (9) so that the air in the passenger compartment (3) is capable of circulating,
**characterized in that**:
the air drawn into the air conditioning duct (8) is conditioned by utilization the heat generated with the at least one catalyst heater (10), and the conditioned air is blown into the passenger compartment (3) so that the air in the passenger compartment (3) is conditioned,
the air conditioning system further includes a function of cooling the interior of the passenger compartment (3) by utilization of a refrigerant (20), wherein the air drawn into the air conditioning duct (8) is cooled by a heat pump method by utilization of the refrigerant (20) heated with the catalyst heater (10), and the cooled air is blown into the passenger compartment (3) so that the interior of the passenger compartment (3) is cooled,
the catalyst heater (10) further includes a heat conductor (18) connected with the catalyst (13), the heat conductor (18) of the catalyst heater (10) is inserted into the air conditioning duct (8), the air drawn into the air conditioning duct (8) is heated by utilization of the heat generated with the catalyst heater (10) through the heat conductor (18) and the heated air is blown into the passenger compartment (3) so that the interior of the passenger compartment (3) is heated.

2. The air conditioning system according to claim 1, wherein the air conditioning duct (8) passes through a passenger seat (26), and the air drawn into the air conditioning duct (8) is heated by utilization of the heat generated with the catalyst heater (10) so that the passenger seat (26) is individually heated.

3. The air conditioning system according to claim 2, wherein the catalyst heater (10) is downsized and disposed in the passenger seat (26), and the heat generated with the catalyst heater (10) further heats the passenger seat (26).

4. The air conditioning system according to any one of claims 1 to 3, wherein the catalyst heater (10) further includes a carrier made of ceramic or stainless steel for supporting the catalyst (13), and a passenger is heated by far infrared rays radiated from the carrier though the blowing port (12).

5. The air conditioning system according to claim 1, wherein the refrigerant (20) is any one of HFO-1234yf, HFO-1234zf, isomer thereof, carbon dioxide, and a hydrocarbon system.

6. The air conditioning system according to any one of claims 1 to 5, wherein the fuel is methanol.

7. The air conditioning system according to any one of claims 1 to 6, further comprising a direct methanol fuel cell (23) capable of driving the air conditioning fan (9).

8. The air conditioning system according to claim 7, wherein the direct methanol fuel cell (23) shares the fuel tank (15) with the catalyst heater (10) as a supply source of methanol.

9. The air conditioning system according to any one of claims 1 to 8, further comprising a solar cell (22) capable of driving the air conditioning fan (9), the solar cell (22) to be provided on a roof of the passenger compartment (3).

10. The air conditioning system according to any one of claims 1 to 9, further comprising an outside air fan (24) having a function of transmitting rotation to the air conditioning fan (9) and an outside air duct (25) that allows air outside the motor vehicle to flow through, wherein the outside air fan (24) is provided in the outside air duct, the outside air fan (24) is rotated by the air outside the motor vehicle flowing through the outside air duct (25) while the motor vehicle travels and the air conditioning fan (9) is rotatable by transmission of rotation of the outside air fan (24).

## Patentansprüche

1. Klimaanlage (1), die in ein Kraftfahrzeug (2) mit zumindest einem Insassenraum (3) für einen Insassen und einem Motorraum (4), der eine Sekundärzelle (6) oder eine Brennstoffzelle für den Antrieb von Rädern mit einem Motor (7) aufnimmt, einzubauen ist, zur Klimatisierung der Luft im Insassenraum, wobei die Klimaanlage zumindest umfasst:
zumindest eine Katalysator-Heizvorrichtung (10), die einen Katalysator (13) umfasst, und einen Brennstofftank (15), der dem Katalysator einen Brennstoff zuführt;
einen Klimaluftkanal (8) und
ein Klimagebläse (9), wobei
die zumindest eine Katalysator-Heizvorrichtung (10) Wärme erzeugt, indem sie dem Katalysator (13) den Brennstoff im Brennstofftank und ein oxidierendes Gas zuführt,
der Klimaluftkanal (8) mit einer Ansaugöffnung (11) zum Ansaugen von Luft aus dem Insassenraum (3) und einer Einblasöffnung (12) zum Blasen von Luft in den Insassenraum (3) verbunden ist, wobei die Ansaugöffnung (11) und die Einblasöffnung (12) in dem Insassenraum (3) ausgebildet sind,
das Klimagebläse (9) in dem Klimaluftkanal (8) vorgesehen ist,
die Luft in dem Insassenraum (3) durch die Ansaugöffnung (11) in den Klimaluftkanal (8) gesaugt wird und die angesaugte Luft durch den Klimaluftkanal (8) strömt und mit dem Klimagebläse (9) aus der Einblasöffnung (12) geblasen wird, sodass die Luft im Insassenraum (3) zirkulieren kann,
**dadurch gekennzeichnet, dass**
die in den Klimaluftkanal (8) gesaugte Luft durch die Nutzung der mit der zumindest einen Katalysator-Heizvorrichtung (10) erzeugten Wärme klimatisiert wird und die klimatisierte Luft in den Insassenraum (3) geblasen wird, sodass die Luft im Insassenraum (3) klimatisiert wird,
die Klimaanlage ferner eine Funktion der Kühlung des Inneren des Insassenraums (3) durch die Verwendung eines Kühlmittels (20) umfasst, wobei die in den Klimaluftkanal (8) gesaugte Luft durch ein Wärmepumpenverfahren durch die Nutzung des mit der Katalysator-Heizvorrichtung (10) erwärmten Kühlmittels (20) gekühlt wird und die gekühlte Luft in den Insassenraum (3) geblasen wird, sodass das Innere des Insassenraums (3) gekühlt wird,
die Katalysator-Heizvorrichtung (10) ferner einen Wärmeleiter (18) umfasst, der mit dem Katalysator (13) verbunden ist, wobei der Wärmeleiter (18) der Katalysator-Heizvorrichtung (10) in den Klimaluftkanal (8) eingeführt ist, die in den Klimaluftkanal (8) gesaugte Luft durch die Nutzung der mit der Katalysator-Heizvorrichtung (10) erzeugten Wärme durch den Wärmeleiter (18) erwärmt wird und die erwärmte Luft in den Insassenraum (3) geblasen wird, sodass das Innere des Insassenraums (3) erwärmt wird.

2. Klimaanlage nach Anspruch 1, wobei der Klimaluftkanal (8) durch einen Insassensitz (26) verläuft und die in den Klimaluftkanal (8) gesaugte Luft durch die Nutzung der mit der Katalysator-Heizvorrichtung (10) erzeugten Wärme erwärmt wird, sodass der Fahrgastsitz (26) individuell erwärmt wird.

3. Klimaanlage nach Anspruch 2, wobei die Katalysator-Heizvorrichtung (10) verkleinert und in dem Fahrgastsitz (26) untergebracht wird und die mit der Katalysator-Heizvorrichtung (10) erzeugte Wärme den Fahrgastsitz (26) weiter erwärmt.

4. Klimaanlage nach einem der Ansprüche 1 bis 3, wobei die Katalysator-Heizvorrichtung (10) ferner einen Träger aus Keramik oder rostfreiem Stahl zur Abstützung des Katalysators (13) umfasst und ein Fahrgast durch langwellige Infrarotstrahlen gewärmt wird, die von dem Träger durch die Einblasöffnung (12) ausgesendet werden.

5. Klimaanlage nach Anspruch 1, wobei das Kühlmittel (20) entweder HFO-1234yf, HFO-1234zf, ein Isomer davon, Kohlendioxid oder ein Kohlenwasserstoffsystem ist.

6. Klimaanlage nach einem der Ansprüche 1 bis 5, wobei der Brennstoff Methanol ist.

7. Klimaanlage nach einem der Ansprüche 1 bis 6, die ferner eine Direktmethanol-Brennstoffzelle (23) umfasst, die das Klimagebläse (9) antreiben kann.

8. Klimaanlage nach Anspruch 7, wobei die Direktmethanol-Brennstoffzelle (23) sich den Brennstofftank (15) mit der Katalysator-Heizvorrichtung (10) als Versorgungsquelle von Methanol teilt.

9. Klimaanlage nach einem der Ansprüche 1 bis 8, die ferner eine Solarzelle (22) umfasst, die das Klimagebläse (9) antreiben kann, wobei die Solarzelle (22) auf einem Dach des Insassenraums (3) vorzusehen ist.

10. Klimaanlage nach einem der Ansprüche 1 bis 9, die ferner ein Außenluftgebläse (24), das die Funktion der Übertragung einer Drehbewegung auf das Klimagebläse (9) hat, und einen Außenluftkanal (25) umfasst, der Luft außerhalb des Kraftfahrzeugs durchströmen lässt, wobei das Außenluftgebläse (24) im Außenluftkanal vorgesehen ist, wobei das Außenluftgebläse (24) durch die Luft außerhalb des Kraftfahrzeugs gedreht wird, die durch den Außenluftkanal (25) strömt, während das Kraftfahrzeug fährt, und wobei sich das Klimagebläse (9) durch die Übertragung der Drehbewegung des Außenluftgebläses (24) drehen lässt.

## Revendications

1. Système de climatisation (1) qui est destiné à être incorporé dans un véhicule automobile (2) comprenant au moins un habitacle (3) pour un passager et un compartiment moteur (4) qui reçoit un accumulateur (6) ou une pile à combustible en vue d'entraîner des roues avec un moteur (7), pour climatiser de l'air dans l'habitacle, le système de climatisation comprenant au moins :
au moins un réchauffeur catalytique (10) comprenant un catalyseur (13) et un réservoir de carburant (15) qui fournit un carburant au catalyseur ;
un conduit de climatisation (8) ; et
un ventilateur de climatisation (9),
l'au moins un réchauffeur catalytique (10) générant de la chaleur en fournissant au catalyseur (13) le carburant dans le réservoir de carburant et un gaz oxydant,
le conduit de climatisation (8) étant relié à un orifice d'admission (11) pour aspirer de l'air à partir de l'habitacle (3) et un orifice de soufflage (12) pour souffler de l'air dans l'habitacle (3), l'orifice d'admission (11) et l'orifice de soufflage (12) étant formés dans l'habitacle (3),
le ventilateur de climatisation (9) étant disposé dans le conduit de climatisation (8),
l'air dans l'habitacle (3) étant aspiré dans le conduit de climatisation (8) à travers l'orifice d'admission (11), et l'air aspiré s'écoulant à travers le conduit de climatisation (8) et étant soufflé à partir de l'orifice de soufflage (12) avec le ventilateur de climatisation (9) de telle sorte que l'air dans l'habitacle (3) est capable de circuler,
**caractérisé par le fait que** :
l'air aspiré dans le conduit de climatisation (8) est climatisé par utilisation de la chaleur générée avec l'au moins un réchauffeur catalytique (10), et l'air climatisé est soufflé dans l'habitacle (3) de telle sorte que l'air dans l'habitacle (3) est climatisé,
le système de climatisation comprend en outre une fonction de refroidissement de l'intérieur de l'habitacle (3) par utilisation d'un réfrigérant (20), l'air aspiré dans le conduit de climatisation (8) étant refroidi par un procédé à pompe à chaleur par utilisation du réfrigérant (20) chauffé avec le réchauffeur catalytique (10), et l'air refroidi étant soufflé dans l'habitacle (3) de telle sorte que l'intérieur de l'habitacle (3) est refroidi,
le réchauffeur catalytique (10) comprend en outre un conducteur de chaleur (18) relié au catalyseur (13), le conducteur de chaleur (18) du réchauffeur catalytique (10) étant introduit dans le conduit de climatisation (8), l'air aspiré dans le conduit de climatisation (8) étant chauffé par utilisation de la chaleur générée avec le réchauffeur catalytique (10) par l'intermédiaire du conducteur de chaleur (18) et l'air chauffé étant soufflé dans l'habitacle (3) de telle sorte que l'intérieur de l'habitacle (3) est chauffé.

2. Système de climatisation selon la revendication 1, dans lequel le conduit de climatisation (8) passe à travers un siège passager (26), et l'air aspiré dans le conduit de climatisation (8) est chauffé par utilisation de la chaleur générée avec le réchauffeur catalytique (10) de telle sorte que le siège passager (26) est chauffé individuellement.

3. Système de climatisation selon la revendication 2, dans lequel le réchauffeur catalytique (10) est de taille réduite et disposé dans le siège passager (26), et la chaleur générée avec le réchauffeur catalytique (10) chauffe encore le siège passager (26).

4. Système de climatisation selon l'une quelconque des revendications 1 à 3, dans lequel le réchauffeur catalytique (10) comprend en outre un support fait de céramique ou d'acier inoxydable pour supporter le catalyseur (13), et un passager est chauffé par des rayons infrarouge lointains émis à partir du support à travers l'orifice de soufflage (12).

5. Système de climatisation selon la revendication 1, dans lequel le réfrigérant (20) est l'un quelconque parmi HFO-1234yf, HFO-1234zf, un isomère de ceux-ci, le dioxyde de carbone, et un système hydrocarboné.

6. Système de climatisation selon l'une quelconque des revendications 1 à 5, dans lequel le carburant est du méthanol.

7. Système de climatisation selon l'une quelconque des revendications 1 à 6, comprenant en outre une pile à combustible à méthanol direct (23) capable d'entraîner le ventilateur de climatisation (9).

8. Système de climatisation selon la revendication 7, dans lequel la pile à combustible à méthanol direct (23) partage le réservoir de carburant (15) avec le réchauffeur catalytique (10) comme source d'alimentation en méthanol.

9. Système de climatisation selon l'une quelconque des revendications 1 à 8, comprenant en outre une pile solaire (22) capable d'entraîner le ventilateur de climatisation (9), la pile solaire (22) étant destinée à être disposée sur un toit de l'habitacle (3).

10. Système de climatisation selon l'une quelconque des revendications 1 à 9, comprenant en outre un ventilateur d'air extérieur (24) ayant une fonction de transmission de rotation au ventilateur de climatisation (9) et un conduit d'air extérieur (25) qui permet à de l'air à l'extérieur du moteur de s'écouler à travers celui-ci, le ventilateur d'air extérieur (24) étant disposé dans le conduit d'air extérieur, le ventilateur d'air extérieur (24) étant mis en rotation par l'air à l'extérieur du véhicule automobile s'écoulant à travers le conduit d'air extérieur (25) pendant que le véhicule automobile se déplace et le ventilateur de climatisation (9) est apte à tourner par transmission de la rotation du ventilateur d'air extérieur (24).
